# EUROPEAN PATENT SPECIFICATION

(11) **EP 1 469 631 B1**
(45) Date of publication and mention of the grant of the patent: **20.09.2006**
(21) Application number: 04252225.0
(22) Date of filing: 16.04.2004
(51) Int. Cl.: H04L 9/00, H04L 29/06, H04L 12/28

(54) **Network device and system for authentication and method thereof**
Netzwerkgerät, System und Verfahren zur Authentifizierung
Dispositif de réseau, système et procédé d'authentification

(30) Priority: 16.04.2003 KR 2003024170
(43) Date of publication of application: 20.10.2004
(60) Divisional application: 05077824.0
(73) Proprietor: SAMSUNG ELECTRONICS CO., LTD., Suwon-si, Gyeonggi-do (KR)
(72) Inventor: Choi, Cheol-won, Seoul (KR); Yi, Kyoung-hoon, Gwanak-gu, Seoul (KR); Yoon, Hyun-sik, Gangdong-gu, Seoul (KR)
(74) Representative: Robinson, Ian Michael

(56) References cited:
- WO-A-03/010669
- GB-A- 2 366 131
- US-A1- 2002 032 855
- US-A1- 2003 035 544
- YOUNG KIM: "802.11b Wireless LAN Authentication, Encryption, and Security" INTERNET, 31 May 2001 (2001-05-31), XP002250118

## Description

The present invention relates to a network device authentication, and more particularly, to a network device and system for authentication and a method for authenticating network devices using the network device for authentication.

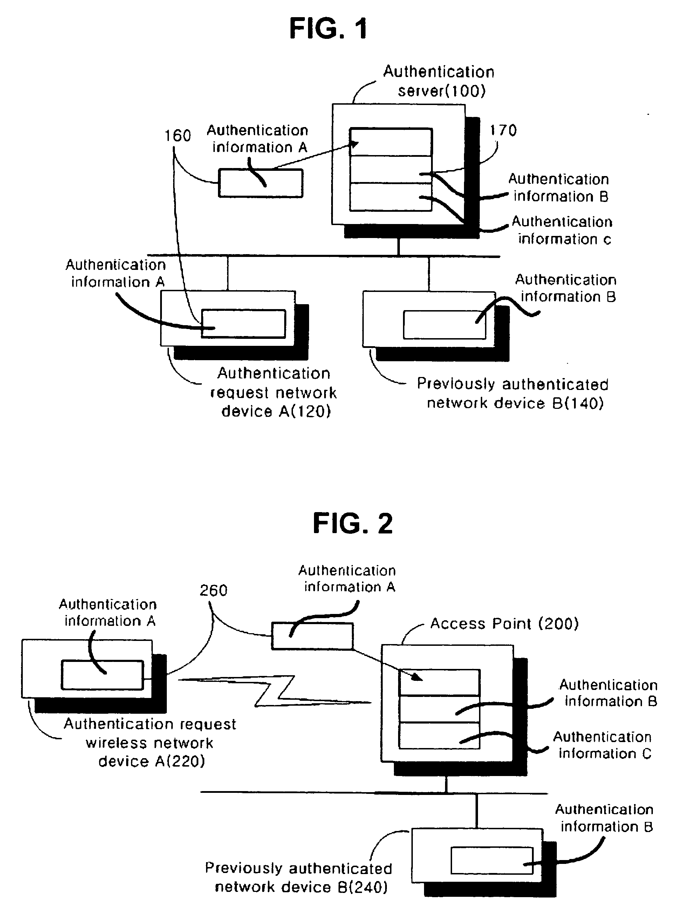

Figure 1 shows a related art authentication process in a wired communication environment. An authentication system for use in the process comprises a network device 120 for requesting authentication, an authentication server 100 for permitting the requested authentication, and a previously authenticated network device 140. Here, a manager registers, within the authentication server 100 and in advance, authentication information 160 regarding a network device 120 to be authenticated. Registered authentication information 170 may include MAC (Medium Access Control) addresses, security keys, SSID (Service Set Identifier) values, etc. of the authentication request network device 120. When the authentication request network device 120 is connected to a network, the authentication information 160 on the authentication request network device 120 is sent to the authentication server 100. Thus, the authentication server 100 confirms the authentication information 160 on the authentication request network device 120 and authenticates the authentication request network device 120.

Figure 2 shows a related art authentication process in a wireless communication environment. An authentication system for use in the process comprises a wireless network device 220 for requesting authentication, an access point 200 for permitting the requested authentication for the wireless network device, and a previously authenticated network device 240. Here, the access point 200 serves to allocate an address to the authentication request wireless network device 220. A manager registers, on the access point 200 and in advance, authentication information 260 regarding the wireless network device 220 to be authenticated as shown in Figure 2. When the authentication request wireless network device 220 requests authentication from the access point 200, the access point 200 confirms the authentication information registered on itself and determines whether to permit the requested authentication.

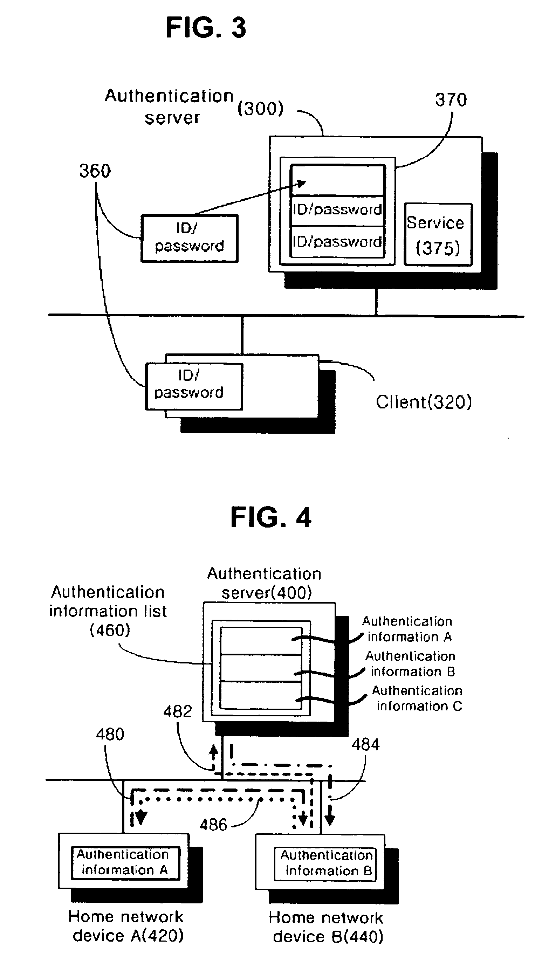

Figure 3 shows a related art authentication process in a client-server environment. An authentication system for use in the process comprises a client 320 for requesting authentication, and an authentication server 300 for providing service 375 to the client 320. The server 300 contains a service 375 that can be provided to the client, and a list 370 of unique IDs and passwords that the client is permitted to use to access the service. Here, a manager registers, on the server 300 and in advance, a set 360 of IDs and passwords used when the client 320 requests authentication. When the client 320 connects to the server 300 and requests authentication by entering its own ID and password, the authentication server 300 confirms the registered list 370 of IDs and passwords to determine whether the authentication and use of the service 375 are permitted.

Figure 4 shows an operation process between authenticated network devices using authentication information registered on an authentication server after authentication has been completed through the process as shown in Figure 1. First, it is assumed that an authentication request network device is a home network device. A home network device A 420 requests connection and use of a service from another home network device B 440, as indicated by an arrow 480. Then, the home network device B 440 requests an authentication server 400 to confirm whether the authentication request home network device A 420 is an authenticated device, as indicated by an arrow 482. Based on an authentication information list 460, the authentication server 400 checks whether the authentication request home network device A 420 is an authenticated device, and informs the check result of the home network device B 440, as indicated by an arrow 484. Then, the home network device B 440 communicates with the home network device A 420 when it is confirmed that the home network device A 420 is authenticated on the basis of the check result.

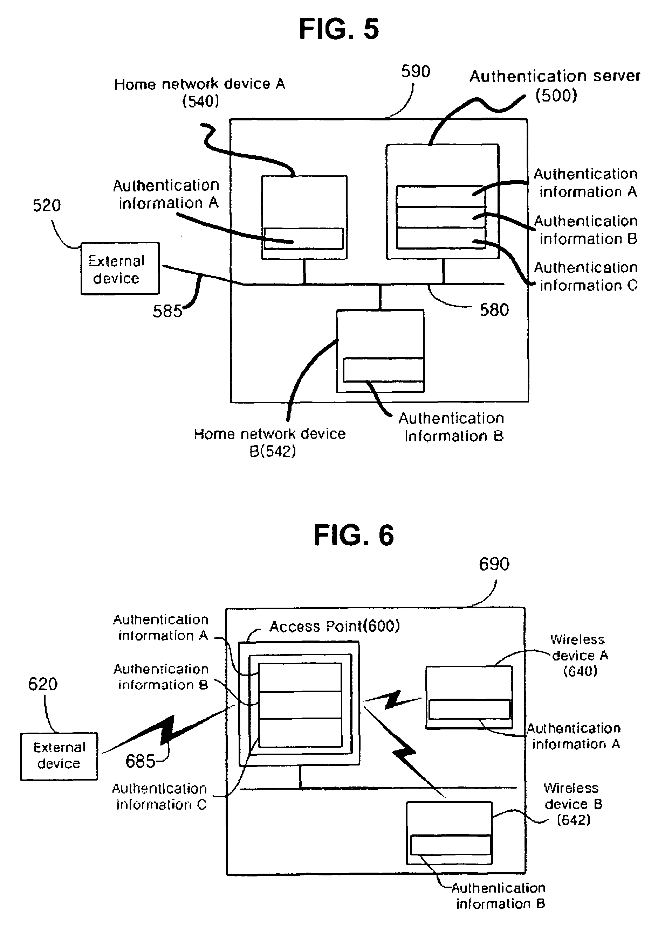

However, the related art authentication methods shown in Figures 1 to 3 suffer from one or more of the following problems:
1. To authenticate network devices, a manager who has knowledge of the networks or computers is needed.
2. In a wired communication environment, intentional connections from the outside to the network may be made. Figure 5 illustrates such a problem occurring in a home network, for example. That is, in a home 590 having a wired home network 580 in which an authentication server 500 and home network devices 540 and 542 are interconnected via a wire communication network, an external device 520 can be intentionally connected to a home network 580 through a wired network 585 accessible from the outside.
3. In a wireless communication environment, authentication information may be registered on a network by any authentication request wireless network device present in the other networks, because coverage of the wireless networks is not clearly distinguished. Figure 6 illustrates such a problem in a wireless home network, for example. That is, in a home 690 having a wireless home network in which an access point 600 and wireless network devices 640 and 642 are interconnected via a wireless link, a wireless link 685 may be established from an external device 620 to the wireless home network, because the coverage of wireless home networks is commonly not distinguished. Accordingly, authentication information not only on the wireless devices 640 and 642 present in the relevant wireless home network but also on the external wireless device 620 present in the other wireless networks may be registered. Therefore, technical solutions for overcoming these related art problems are needed.

GB-A-2 366 131 discloses a short reach communication network comprising a plurality of short reach RF base stations, preferably Bluetooth, which establish communication with authorised terminals located in an area of interest serviced by the base stations. The network connects authorised terminals to each other. The base stations are provided within a building and use the in-building wiring infrastructure, such as a telephone line or a LAN to connect to a central data processing centre having a mobility manager. The processing centre monitors the location of authorised terminals within the building, determining whether or not they are mobile and validating their identity and associated access rights.

XP-002250118 "802.11b Wireless LAN Authentication, Encription, and Security", Young Kim, discloses a RADIUS (Remote Authentication Dial In User Service) authentication server which generates session keys during a negotiation. The authentication server communicates the keys to an authenticator and to a supplicant (via the authenticator) during a transaction. An access point and an end station are then aware of the session keys. The authenticator uses the session keys to create a dynamic Wired Equivalent Privacy (WEPN) algorithm key.

US 2002/0032855 discloses a method, system and computer program for providing location-independent packet routing and secure accessing and wireless networking environment, enabling client devices to travel seamlessly within the environment. An address translation process that is transparent to the client and the server is automatically performed as the device roams through the environment, enabling efficient migration from one supporting access point to another. The secure access techniques provide user-centric authentication and allows policy-driven packet filtering, while taking advantage of encryption capabilities that are built into the hardware.

US 2003/0035544 discloses a mobile station location server which determines the mobile stations location through various location techniques or by receiving the location information from the mobile station from the mobile station over an encrypted channel.

WO-A-03/010669 discloses a system, method, signal and computer program for providing secure wireless access to a private database and application without requiring a separate wireless client-server internet working security protocol infrastructure.

According to the present invention there is provided a system, a method and home network devices as set forth in the appended claims. Preferred features of the invention will be apparent from the dependent claims, and the description which follows.

The present invention allows a general user, who has no knowledge of authentication, computers and the like, to easily perform authentication for network devices, and also allows a user to safely and easily perform authentication for network devices by causing authentication information to be exchanged using an interface with a limited coverage so as to avoid any unauthenticated connection between network devices.

According to one aspect of the present invention, there is provided a system for authentication in a home network, comprising: a first home network device including an authentication information generating unit operable to generate its own authentication information and an interface unit operable to transmit the generated authentication information to other home network devices; a second home network device including an interface unit operable to receive the authentication information and an authentication information registration unit operable to register the received authentication information thereon; characterised in that: the interface unit of the first home network device is arranged to transmit the generated authentication information to other home network devices over a private network having a limited coverage; and the interface unit of the second home network device (700,800) being operable to receive the authentication information over the private network.

According to another aspect of the present invention, there is also provided a method for authenticating home network devices, comprising: generating authentication information on a specific home network device and transmitting the generated authentication information to other home network devices; and receiving the transmitted authentication information and registering the received authentication information on another home network device; characterised in that: the generated authentication information is transmitted to other home network devices over a private network having a limited coverage; and the transmitted authentication information is received on the another home network device over the private network.

According to a further aspect of the present invention, there is provided a home network device, comprising: an authentication information generation unit operable to generate authentication information of the network device; and an interface unit operable to transmit the generated authentication information to other home network devices; characterised in that: the interface unit is operable to transmit the generated authentication information to the other home network devices over a private network having a limited coverage.

According to a still further aspect of the present invention, there is provided a home network device for authentication, comprising: a means for receiving authentication information; and a means for registering the received authentication information; characterised in that: the means for receiving authentication information is arranged to receive authentication information over a private network having a limited coverage.

According to a still further aspect of the present invention, there is provided home network device, comprising: a means for receiving authentication information from a specific home network device; characterised in that: the means for receiving is operable to receive the authentication information from the specific home network device over a private network having a limited coverage; and the home network device comprises a means for transmitting the received authentication information over the private network to other home network devices.

According to a still further aspect of the present invention, there is provided a method of authenticating network devices, comprising: transmitting authentication information generated by a network device; and receiving the authentication information; characterised in that the method comprises: transmitting a first unique key received over a private network and the authentication information generated by the network device that has received the first unique key; receiving the first unique key and the authentication information; comparing the received first unique key with a second unique key received over the private network, and registering the received authentication information when both keys match.

For a better understanding of the invention, and to show how embodiments of the same may be carried into effect, reference will now be made, by way of example, to the accompanying diagrammatic drawings in which:
Figure 1 is a diagram illustrating a related art authentication process in a wired network environment;
Figure 2 is a diagram illustrating a related art authentication process in a wireless network environment;
Figure 3 is a diagram illustrating a related art authentication process in a client-server environment;
Figure 4 is a diagram illustrating an operating process between authenticated network devices after the authentication has been completed, according to the related art;
Figure 5 is a diagram showing problems in a related art wired home network;
Figure 6 is a diagram showing problems in a related art wireless home network;
Figure 7 is a diagram illustrating a process of transmitting authentication information through interface units of network devices according to an embodiment of the present invention;
Figure 8 is a diagram illustrating a process of transmitting authentication information through interface units of network devices using a repeater according to another embodiment of the present invention;
Figure 9 is a diagram illustrating a process of transmitting authentication information through interface units of network devices using a unique key according to a further embodiment of the present invention;
Figure 10 illustrates a format of an authentication information message for an authentication request network device according to an embodiment of the present invention;
Figure 11 is a process flowchart for illustrating an authentication method in an environment as shown in Figure 7;
Figure 12 is a process flowchart for illustrating an authentication method in an environment as shown in Figure 9;
Figure 13 is a diagram illustrating an operating process for network devices operating in a wired network environment after authentication has been completed, according to the present invention; and
Figure 14 is a diagram illustrating an operating process for network devices operating in a wireless network environment after authentication has been completed, according to the present invention.

Prior to a detailed description of the present invention, some definitions on terminologies provided herein are first discussed as follows:
1. Authentication information: Corresponds to information needed for authentication and includes information on an authentication request network device, authentication information identifier, etc.
2. Authentication information identifier: Corresponds to an identifier for discriminating whether a message to be transmitted contains authentication information.
3. SSID (Service Set Identifier): Corresponds to a unique identifier of 32-byte length, which is added to each header of packets transmitted over a wireless LAN.
4. Bluetooth: Corresponds to a wireless Internet connection scheme over a local area network.

Hereinafter, a network device and system for authentication and a method for authenticating network devices using such a network device according to a preferred embodiment of the present invention will be described with reference to the accompanying drawings.

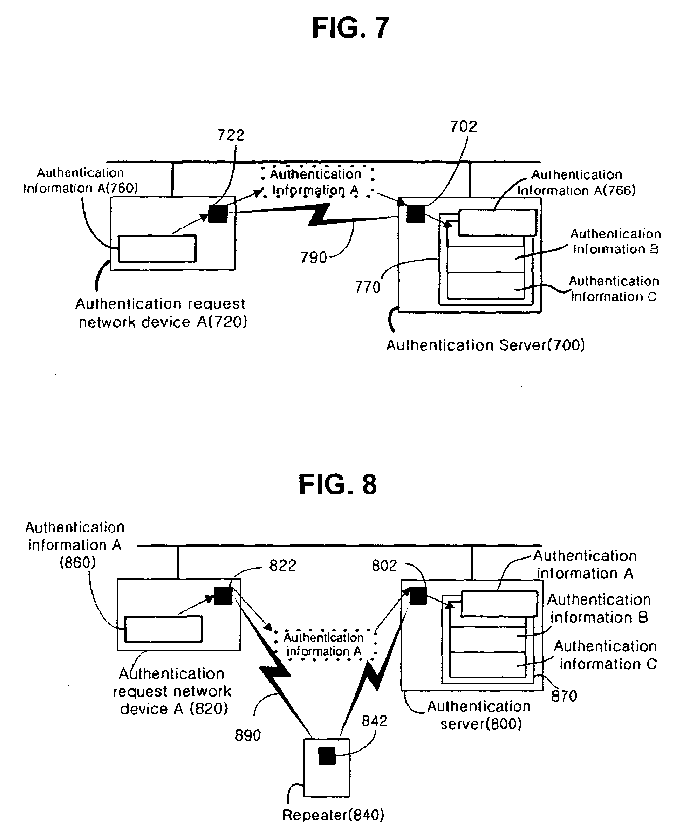

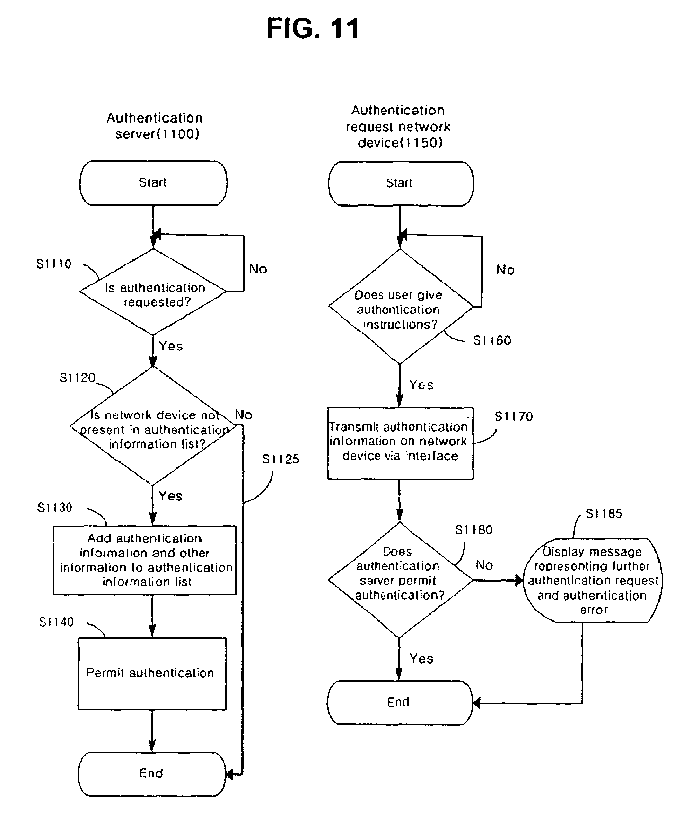

Figure 7 is a diagram illustrating a method for authenticating network devices according to an embodiment of the present invention. A user instructs a network device 720 to request authentication from an authentication server 700. Then, authentication information 760 on the authentication request network device 720 is transmitted to the authentication server 700 via an interface 722 of the network device 720 over a private network 790. At this time, the user may instruct to permit the authentication using an authentication button attached to the network device 720, an application program for authentication and the like. Interfaces 702 and 722 are wired/wireless interfaces with limited coverage and directivity, and include local area communication interfaces such as IrDA (Infra-red Data Association) communications and blue tooth communications, or wire cable interfaces such as serial/parallel cables with a closure property. The authentication server 700 checks whether an authentication information list 770 of the server contains the authentication information 766 received through the interface 702. If authentication information 766 is not present in the list, the server adds the authentication information 766 on the network device 720 to the authentication information list 770 and then completes the authentication process. Figure 11 is a process flowchart illustrating the authentication method shown in Figure 7, which will be described later.

Figure 8 is a diagram illustrating a method for authenticating network devices using a repeater according to another embodiment of the present invention. The repeater 840 simply receives authentication information 860 on an authentication request network device 820 via its own interface 842 over a private network 890 and sends the authentication information 860 to an interface 802 of an authentication server 800. The authentication server 800 checks whether the authentication information on the authentication request network device 820 from the repeater 840 is present in an authentication information list 870. If it is not present, the authentication server 800 adds the authentication information to the authentication information list 870 and completes the authentication process. At this time, the repeater may be used in the form of a remote control. According to this embodiment shown in Figure 8, a user can perform authentication for the authentication request network device 820 within a local area without directly contacting the authentication request network device 820.

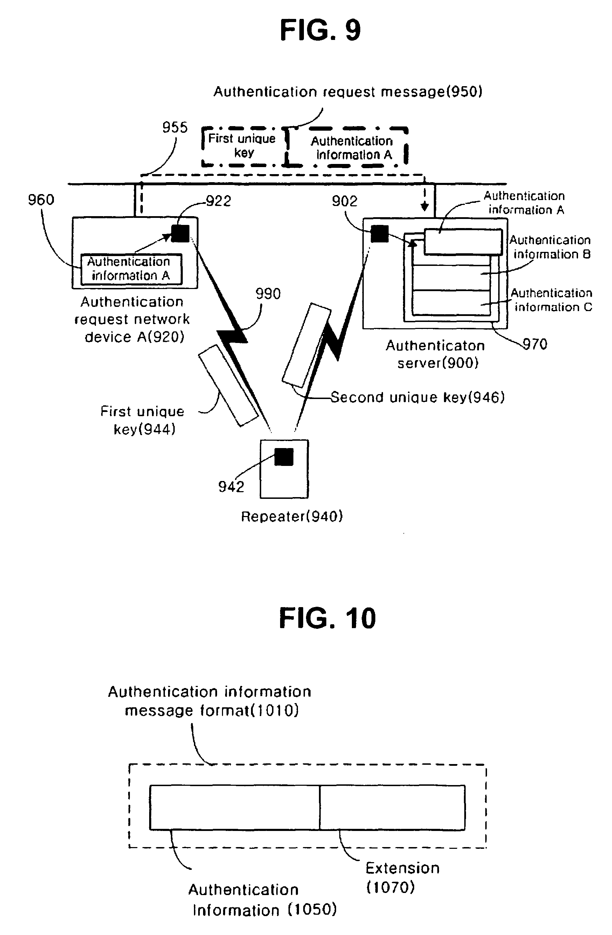

Figure 9 is a diagram illustrating a method for authenticating network devices using a unique key according to a further embodiment of the present invention. A repeater 940 sends a first unique key 944 and a second unique key 946 via its own interface 942 over a private network 990 to an interface 922 of an authentication request network device 920 and an interface 902 of an authentication server 900, respectively. The authentication request network device 920 generates an authentication request message 950 using the first unique key 944 and authentication information 960 and sends the generated message 950 to the authentication server 900.

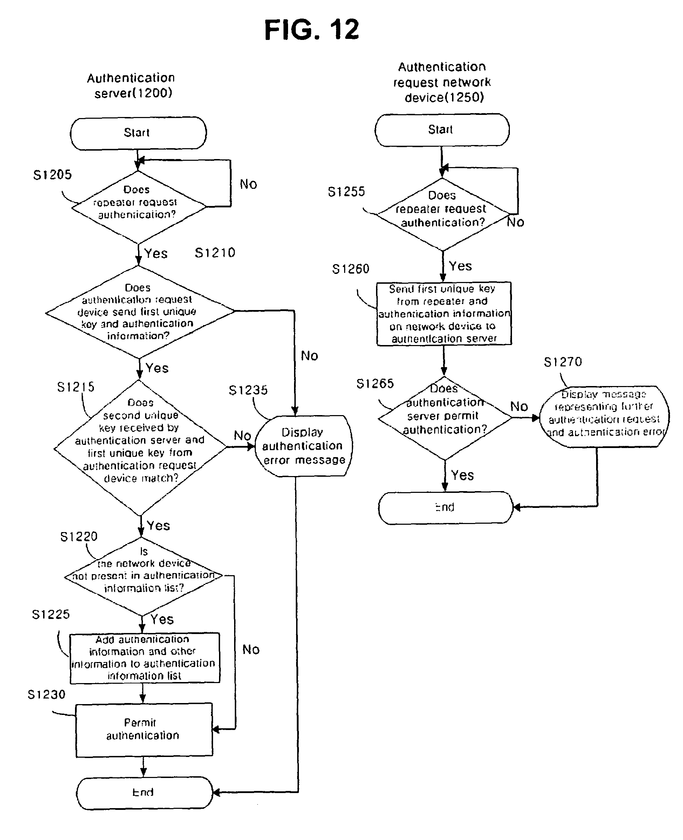

After receiving the authentication request message 950, the authentication server 900 compares the second unique key 946 to the first unique key 944 included in the authentication request message 950. If the two keys match, the authentication server checks whether the authentication information included in the authentication request message 950 is present in the authentication information list 970. Then, if it is not present, the authentication server adds the authentication information to the list and completes the authentication process. Figure 12 is a process flowchart illustrating the authentication method shown in Figure 9, which will be described later. According to this embodiment shown in Figure 9, the user can prevent intentional connection from the outside to the network by comparing the first unique key 944 with the second unique key 946 even while using the existing general network other than the private network.

Figure 10 illustrates a format of an authentication information message for an authentication request network device according to an embodiment of the present invention. The authentication information message 1010 includes authentication information 1050, and alternatively may include an extension 1070 in addition to the authentication information 1050. The authentication information 1050 may include information on the authentication request network device, information on the authentication information registering network device, an identifier for discriminating whether the message includes authentication information, and the like. The information on the authentication request network device may include a security key, an MAC (Medium Access Control) address, an SSID, etc. The authentication information message 1010 may include the extension 1070 to deliver any information other than the authentication information 1050.

Figure 11 is a process flowchart illustrating the authentication method shown in Figure 7. An authentication server 1100 checks whether there is an authentication request from an authentication request network device 1150 (S1110). If it is checked that there is an authentication request, the authentication server 1100 checks whether the authentication information about the authentication request network device 1150 is included in its own authentication information list (S1120). If the authentication information on the authentication request network device 1150 is not included in the authentication information list, the authentication server will not permit the authentication and completes the authentication process (S1125). Otherwise, the authentication server adds the authentication information and the other information about the network device 1150 to the authentication information list (S1130) and permits the authentication (S1140).

On the other hand, the authentication request network device 1150 confirms whether a user issues authentication instructions (S1160). If the user issues authentication instructions, the authentication request network device sends its own authentication information via its own interface over a private network (S1170). Then, if the authentication server permits the authentication, the authentication process will be completed. Otherwise, a message for indicating a further authentication request or an authentication error can be displayed (S1185).

Figure 12 is a process flowchart illustrating the authentication method shown in Figure 9. An authentication server 1200 checks whether a repeater makes a request for authentication (S1205). If there is an authentication request from the repeater, the authentication server checks whether the authentication request network device 1250 sends a first unique key and authentication information to the server (S1210). Unless receiving the first unique key and the authentication information from the authentication request device 1250, the authentication server 1200 displays authentication error message or completes the authentication process (S1235). Otherwise, the authentication server 1200 compares the first unique key received from the authentication request device 1250 with a second unique key received from the repeater and then checks whether both keys match (S1215). If the two keys are the same, the authentication server 1200 checks whether authentication information from the authentication request device 1250 is included in an authentication information list of the authentication server. If the authentication information is included in the list, the authentication server permits the authentication (S1230). Otherwise, however, the authentication server adds the authentication information and the other information on the device 1250 to the authentication information list (S1225) and then permits the authentication (S1230). On the other hand, the authentication request network device 1250 confirms whether the repeater make a request for authentication (S1255). When the repeater has made a request for authentication, the network device 1250 sends the first unique key from the repeater and its own authentication information to the authentication server 1200 (S1260). Then, if the authentication server 1200 permits authentication, the authentication process will be completed. Otherwise, the server will display a message for indicating a further authentication request or an authentication error (S1270) and then completes the authentication process.

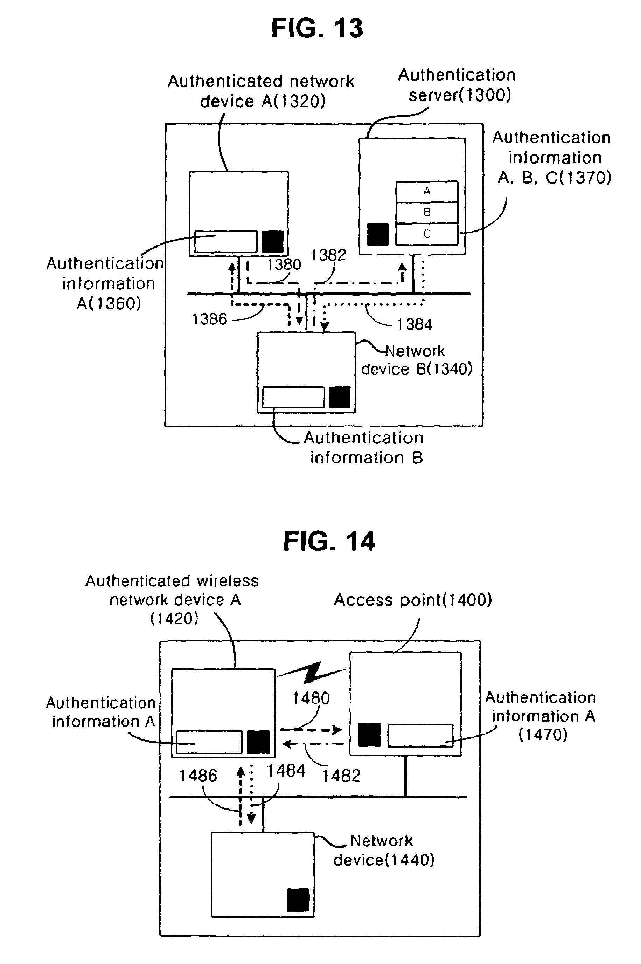

Figure 13 illustrates a process of operating authenticated network devices in a wired network environment according to an embodiment of the present invention. An authenticated network device A 1320 transmits a message including its own authentication information 1360 to communicate with another network device B 1340, as indicated by an arrow 1380. After receiving the message, the network device B 1340 transmits the authentication information contained in the received message to an authentication server 1300 and requests the server 1300 to confirm whether the network device A 1320 has been authenticated, as indicated by an arrow 1382. Then, the authentication server 1300 checks whether the authentication information contained in the received message is included in its own authentication information list 1370, and sends the result to the network device B 1340 that has requested confirmation, as indicated by an arrow 1384. Finally, the network device B 1340 confirms that the network device A 1320 has been authenticated and then communicates with the network device A, as indicated by an arrow 1386.

Figure 14 illustrates a process of operating authenticated network devices in a wireless network environment according to another embodiment of the present invention. The authenticated wireless network device 1420 sends, to an access point 1400, a request for connection to anther network device, as indicated by an arrow 1480. In response to the request, the access point 1400 authenticates the wireless network device 1420 using its own authentication information list 1470 and assigns a predetermined address to the wireless network device, as indicated by an arrow 1482. Then, the wireless network device 1420 sends the other network device 1440 a request for connection thereto, as indicated by an arrow 1484. Thus, the requested network device 1440 permits the connection, as indicated by an arrow 1486.

According to the present invention configured as such, the following advantages can be obtained.
1. In a network environment that is not managed by a manager, authentication for network devices can be done.
2. A general network user who has no knowledge of networks or authentication can easily perform an authentication process.
3. In a wired or wireless network environment, intentional unauthorized or accidental connection to the network or use of service can be easily and effectively prevented by a predetermined interface.

Although a few preferred embodiments have been shown and described, it will be appreciated by those skilled in the art that various changes and modifications might be made without departing from the scope of the invention, as defined in the appended claims.

All of the features disclosed in this specification (including any accompanying claims, abstract and drawings), and/or all of the steps of any method or process so disclosed, may be combined in any combination, except combinations where at least some of such features and/or steps are mutually exclusive.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A system for authentication in a home network, comprising:
a first home network device (720,820) including an authentication information generating unit operable to generate its own authentication information (760,860) and an interface unit (722,822) operable to transmit the generated authentication information (760,860) to other home network devices (700,800);
a second home network device (700,800) including an interface unit (702,802) operable to receive the authentication information (760) and an authentication information registration unit (770,870) operable to register the received authentication information (760,860) thereon;
**characterised in that**:
the interface unit (722,822) of the first home network device (720,820) is arranged to transmit the generated authentication information (760,860) to other home network devices (700,800) over a private network (790,890) having a limited coverage; and
the interface unit (702,802) of the second home network device (700,800) being operable to receive the authentication information (760,860) over the private network (790,890).

2. The system as claimed in claim 1, further comprising:
a home network device (840) operable to receive the authentication information (760, 860) transmitted from the first home network device (720, 820) over the private network (790, 890) and transmit the received authentication information (760, 860) over the private network (790, 890) to the second home network device (700, 800).

3. The system as claimed in claim 1 or 2, wherein the authentication information (760, 860) includes information on the first home network device (720, 820) for generating its own authentication information (760, 860).

4. The system as claimed in claim 1, 2 or 3, wherein the authentication information (760, 860) includes information on the second home network device (700, 800) for registering the authentication information (760, 860) thereon.

5. The system as claimed in any of claims 1 to 4, wherein the authentication information (760, 860) includes an authentication information identifier.

6. The system as claimed in any of claims 1 to 5, wherein the interface unit (722,702, 822, 802) includes a transceiver unit for local area communication.

7. The system as claimed in claim 6, wherein the local area communication includes IrDA communication.

8. The system as claimed in claim 6, wherein the local area communication includes Bluetooth communication.

9. The system as claimed in claim 6, wherein the local area communication includes wired serial communication.

10. The system as claimed in claim 6, wherein the local area communication includes wired parallel communication.

11. A method for authenticating home network devices, comprising:
generating authentication information (760) on a specific home network device (720) and transmitting the generated authentication information (760) to other home network devices (700); and
receiving the transmitted authentication information (760) and registering the received authentication information (766) on another home network device (700);
**characterised in that**:
the generated authentication information (760) is transmitted to other home network devices (700) over a private network (790) having a limited coverage; and
the transmitted authentication information is received on the another home network device (700) over the private network (790).

12. The method as claimed in claim 11, comprising:
repeating the authentication information (860) transmitted in the generating step over the private network (890); and
the received authentication information (860) being transmitted in the repeating step over the private network (890).

13. The method as claimed in either claim 11 or 12, wherein the authentication information (760, 860) includes information on the specific home network device (720, 820) for generating its own authentication information (760, 860).

14. The method as claimed in either claim 11, 12 or 13, wherein the authentication information (760, 860) includes information on the another home network device (700, 800) for registering the authentication information (760) thereon.

15. The method as claimed in any of claims 11 to 14, wherein the authentication information (760, 860) includes an authentication information identifier.

16. A home network device (720,820), comprising:
an authentication information generation unit operable to generate authentication information (760,860) of the network device (720,820); and
an interface unit (722,822) operable to transmit the generated authentication information to other home network devices (700,800);
**characterised in that**:
the interface unit (722,822) is operable to transmit the generated authentication information (760,860) to the other home network devices (700,800) over a private network (790,890) having a limited coverage.

17. The home network device (720,820) as claimed in claim 16, wherein the home network device (720,820) generates its own authentication information (760,860) and transmits the generated authentication information (760,860) to other home network devices (700,800) over the private network (790,890).

18. A home network device (700,800) for authentication (700), comprising:
a means (702,802) for receiving authentication information (760, 860); and
a means (770,870) for registering the received authentication information;
**characterised in that**:
the means (702,802) for receiving authentication information is arranged to receive authentication information (760,860) over a private network (790,890) having a limited coverage.

19. The home network device as claimed in claim 18, comprising:
an interface unit (702,802) operable to receive the authentication information (760) over the private network (790,890) from a home network device (720,820) for requesting authentication; and
an authentication information registration unit (770,870) operable to register the received authentication information (760,860) thereon.

20. A home network device (840), comprising:
a means (842) for receiving authentication information (860) from a specific home network device (820);
**characterised in that**:
the means for receiving (842) is operable to receive the authentication information (860) from the specific home network device (820) over a private network (890) having a limited coverage; and
the home network device (840) comprises a means (842) for transmitting the received authentication information (860) over the private network (890) to other home network devices (800).

21. The home network device as claimed in any of claims 16 to 20, wherein the authentication information (760, 860) includes information on a home network device (720, 820) for requesting authentication.

22. The home network device as claimed in any of claims 16 to 21, wherein the authentication information (760, 860) includes information on a home network device (700, 800) for registering the authentication information.

23. The home network device as claimed in any of claims 16 to 22, wherein the authentication information (760, 860) includes an authentication information identifier.

24. The home network device as claimed in either claim 17 or 19, wherein the interface unit (702, 722) includes a transceiver unit (702,722) for local area communication.

25. The home network device as claimed in claim 24, wherein the local area communication includes IrDA communication.

26. The home network device as claimed in claim 24, wherein the local area communication includes Bluetooth communication.

27. The home network device as claimed in claim 24, wherein the local area communication includes wired serial communication.

28. The home network device as claimed in claim 24, wherein the local area communication includes wired parallel communication.

## Patentansprüche

1. System zur Authentifizierung in einem Heim-Netzwerk, das umfasst:
eine erste Heim-Netzwerkvorrichtung (720, 820), die eine Authentifizierungsinformations-Erzeugungseinheit, die betrieben werden kann, um ihre eigenen Authentifizierungsinformationen (760, 860) zu erzeugen, und eine Schnittstelleneinheit (722, 822) enthält, die betrieben werden kann, um die erzeugten Authentifizierungsinformationen (760, 860) zu anderen Heim-Netzwerkvorrichtungen (700, 800) zu senden;
eine zweite Heim-Netzwerkvorrichtung (700, 800), die eine Schnittstelleneinheit (702, 802), die betrieben werden kann, um die Authentifizierungsinformationen (760) zu empfangen, und eine Authentifizierungsinformations-Registriereinheit (770, 870) enthält, die betrieben werden kann, um die empfangenen Authentifizierungsinformationen (760, 860) darin zu registrieren;
**dadurch gekennzeichnet, dass**:
die Schnittstelleneinheit (722, 822) der ersten Heim-Netzwerkvorrichtung (720, 820) so eingerichtet ist, dass sie die erzeugten Authentifizierungsinformationen (760, 860) zu anderen Heim-Netzwerkvorrichtungen (700, 800) über ein privates Netzwerk (790, 890) mit einer begrenzten Abdeckung sendet; und
die Schnittstelleneinheit (702, 802) der zweiten Heim-Netzwerkvorrichtung (700, 800) betrieben werden kann, um die Authentifizierungsinformationen (760, 860) über das private Netzwerk (790, 890) zu empfangen.

2. System nach Anspruch 1, das umfasst:
eine Heim-Netzwerkvorrichtung (840), die betrieben werden kann, um die von der ersten Heim-Netzwerkvorrichtung (720, 820) gesendeten Authentifizierungsinformationen (760, 860) über das private Netzwerk (790, 890) zu empfangen und die empfangenen Authentifizierungsinformationen (760, 860) über das private Netzwerk (790, 890) zu der zweiten Heim-Netzwerkvorrichtung (700, 800) zu senden.

3. System nach Anspruch 1 oder 2, wobei die Authentifizierungsinformationen (760, 860) Informationen über die erste Heim-Netzwerkvorrichtung (720, 820) enthalten, um ihre eigenen Authentifizierungsinformationen (760, 860) zu erzeugen.

4. System nach Anspruch 1, 2 oder 3, wobei die Authentifizierungsinformationen (760, 860) Informationen über die zweite Heim-Netzwerkvorrichtung (700, 800) enthalten, um die Authentifizierungsinformationen (760, 860) darin zu registrieren.

5. System nach einem der Ansprüche 1 bis 4, wobei die Authentifizierungsinformationen (760, 860) eine Authentifizierungsinformations-Kennung enthalten.

6. System nach einem der Ansprüche 1 bis 5, wobei die Schnittstelleneinheit (722, 702, 822, 802) eine Sendeempfängereinheit für lokale Kommunikation enthält.

7. System nach Anspruch 6, wobei die lokale Kommunikation IrDA-Kommunikation einschließt.

8. System nach Anspruch 6, wobei die lokale Kommunikation Bluetooth-Kommunikation einschließt.

9. System nach Anspruch 6, wobei die lokale Kommunikation verdrahtete Seriell-Kommunikation einschließt.

10. System nach Anspruch 6, wobei die lokale Kommunikation verdrahtete Parallel-Kommunikation einschließt.

11. Verfahren zum Authentifizieren von Heim-Netzwerkvorrichtungen, das umfasst:
Erzeugen von Authentifizierungsinformationen (760) über eine bestimmte Heim-Netzwerkvorrichtung (720) und Senden der erzeugten Authentifizierungsinformationen (760) zu anderen Heim-Netzwerkvorrichtungen (700); und
Empfangen der gesendeten Authentifizierungsinformationen (760) und Registrieren der empfangenen Authentifizierungsinformationen (766) in einer anderen Heim-Netzwerkvorrichtung (700);
**dadurch gekennzeichnet, dass**
die erzeugten Authentifizierungsinformationen (760) über ein privates Netzwerk (790) mit begrenzter Abdeckung zu anderen Heim-Netzwerkvorrichtungen (700) gesendet werden; und
die gesendeten Authentifizierungsinformationen in der anderen Heim-Netzwerkvorrichtung (700) über das private Netzwerk (790) empfangen werden.

12. Verfahren nach Anspruch 11, das umfasst:
Wiederholen der in dem Erzeugungsschritt über das private Netzwerk (890) gesendeten Authentifizierungsinformationen (860); und
wobei die empfangenen Authentifizierungsinformationen (860) in dem Wiederholungsschritt über das private Netzwerk (890) gesendet werden.

13. Verfahren nach Anspruch 11 oder 12, wobei die Authentifizierungsinformationen (760, 860) Informationen über die bestimmte Heim-Netzwerkvorrichtung (720, 820) enthalten, um ihre eigenen Authentifizierungsinformationen (760, 860) zu erzeugen.

14. Verfahren nach Anspruch 11, 12 oder 13, wobei die Authentifizierungsinformationen (760, 860) Informationen über die andere Heim-Netzwerkvorrichtung (700, 800) enthalten, um die Authentifizierungsinformationen (760) darin zu registrieren.

15. Verfahren nach einem der Ansprüche 11 bis 14, wobei die Authentifizierungsinformationen (760, 860) eine Authentifizierungsinformations-Kennung enthalten.

16. Heim-Netzwerkvorrichtung (720, 820), die umfasst:
eine Authentifizierungsinformations-Erzeugungseinheit, die betrieben werden kann, um Authentifizierungsinformationen (760, 860) der Netzwerkvorrichtung (720, 820) zu erzeugen; und
eine Schnittstelleneinheit (722, 822), die betrieben werden kann, um die erzeugten Authentifizierungsinformationen zu anderen Heim-Netzwerkvorrichtungen (700, 800) zu senden;
**dadurch gekennzeichnet, dass**
die Schnittstelleneinheit (722, 728) betrieben werden kann, um die erzeugten Authentifizierungsinformationen (760, 860) über ein privates Netzwerk (790, 890) mit einer begrenzten Abdeckung zu den anderen Heim-Netzwerkvorrichtung (700, 800) zu senden.

17. Heim-Netzwerkvorrichtung (720, 820) nach Anspruch 16, wobei die Heim-Netzwerkvorrichtung (720, 820) ihre eigenen Authentifizierungsinformationen (760, 860) erzeugt und die erzeugten Authentifizierungsinformationen (760, 860) über das private Netzwerk (790, 890) zu anderen Heim-Netzwerkvorrichtung (700, 800) sendet.

18. Heim-Netzwerkvorrichtung (700, 800) zur Authentifizierung (700), die umfasst:
eine Einrichtung (702, 802) zum Empfangen von Authentifizierungsinformationen (760, 860); und
eine Einrichtung (770, 870) zum Registrieren der empfangenen Authentifizierungsinformationen;
**dadurch gekennzeichnet, dass**:
die Einrichtung (702, 802) zum Empfangen von Authentifizierungsinformationen so eingerichtet ist, dass sie Authentifizierungsinformationen (760, 860) über ein privates Netzwerk (790, 890) mit einer begrenzten Abdeckung empfängt.

19. Heim-Netzwerkvorrichtung nach Anspruch 18, die umfasst:
eine Schnittstelleneinheit (702, 802), die betrieben werden kann, um die Authentifizierungsinformationen (760) über das private Netzwerk (790, 890) von einer Heim-Netzwerkvorrichtung (720, 820) zum Anfordern von Authentifizierung zu empfangen; und
eine Authentifizierungsinformations-Registriereinheit (770, 870), die betrieben werden kann, um die empfangenen Authentifizierungsinformationen (760, 860) zu empfangen.

20. Heim-Netzwerkvorrichtung (840), die umfasst:
eine Einrichtung (842) zum Empfangen von Authentifizierungsinformationen (860) von einer bestimmten Heim-Netzwerkvorrichtung (820);
**dadurch gekennzeichnet, dass**
die Einrichtung zum Empfangen (842) betrieben werden kann, um die Authentifizierungsinformationen (860) von der bestimmten Heim-Netzwerkvorrichtung (820) über ein privates Netzwerk (890) mit einer begrenzten Abdeckung zu empfangen; und
die Heim-Netzwerkvorrichtung (840) eine Einrichtung (842) zum Senden der empfangenen Authentifizierungsinformationen (860) über das private Netzwerk (890) zu anderen Heim-Netzwerkvorrichtungen (800) umfasst.

21. Heim-Netzwerkvorrichtung nach einem der Ansprüche 16 bis 20, wobei die Authentifizierungsinformationen (760, 860) Informationen über eine Heim-Netzwerkvorrichtung (720, 820) zum Anfordern von Authentifizierung enthalten.

22. Heim-Netzwerkvorrichtung nach einem der Ansprüche 16 bis 21, wobei die Authentifizierungsinformationen (760, 860) Informationen über eine Heim-Netzwerkvorrichtung (700, 800) zum Registrieren der Authentifizierung enthalten.

23. Heim-Netzwerkvorrichtung nach einem der Ansprüche 16 bis 22, wobei die Authentifizierungsinformation (760, 860) eine Authentifizierungsinformations-Kennung enthalten.

24. Heim-Netzwerkvorrichtung nach Anspruch 17 oder 19, wobei die Schnittstelleneinheit (702, 722) eine Sendeempfängereinheit (702, 722) für lokale Kommunikation enthält.

25. Heim-Netzwerkvorrichtung nach Anspruch 24, wobei die lokale Kommunikation IrDA-Kommunikation einschließt.

26. Heim-Netzwerkvorrichtung nach Anspruch 24, wobei die lokale Kommunikation Bluetooth-Kommunikation einschließt.

27. Heim-Netzwerkvorrichtung nach Anspruch 24, wobei die lokale Kommunikation verdrahtete Seriell-Kommunikation einschließt.

28. Heim-Netzwerkvorrichtung nach Anspruch 24, wobei die lokale Kommunikation verdrahtete Parallel-Kommunikation einschließt.

## Revendications

1. Système d'authentification dans un réseau domestique, comportant :
un premier dispositif de réseau domestique (720, 820) incluant une unité de génération d'informations d'authentification opérationnelle pour générer ses propres informations d'authentification (760, 860) et une unité d'interface (722, 822) opérationnelle pour transmettre les informations d'authentification générées (760, 860) à d'autres dispositifs de réseau domestique (700, 800),
un second dispositif de réseau domestique (700, 800) incluant une unité d'interface (702, 802) opérationnelle pour recevoir les informations d'authentification (760) et une unité d'enregistrement d'informations d'authentification (770, 870) opérationnelle pour enregistrer dessus les informations d'authentification reçues (760, 860),
**caractérisé en ce que**
l'unité d'interface (722, 822) du premier dispositif de réseau domestique (720, 820) est conçue pour transmettre les informations d'authentification générées (760, 860) à d'autres dispositifs de réseau domestique (700, 800) sur un réseau privé (790, 890) ayant une couverture limitée, et
l'unité d'interface (702, 802) du second dispositif de réseau domestique (700, 800) étant opérationnelle pour recevoir les informations d'authentification (760, 860) sur le réseau privé (790, 890).

2. Système selon la revendication 1, comportant de plus :
un dispositif de réseau domestique (840) opérationnel pour recevoir les informations d'authentification (760, 860) transmises par le premier dispositif de réseau domestique (720, 820) sur le réseau privé (790, 890) et transmettre les informations d'authentification reçues (760, 860) sur le réseau privé (790, 890) au second dispositif de réseau domestique (700, 800).

3. Système selon la revendication 1 ou 2, dans lequel les informations d'authentification (760, 860) incluent des informations concernant le premier dispositif de réseau domestique (720, 820) pour générer ses propres informations d'authentification (760, 860).

4. Système selon la revendication 1, 2 ou 3, dans lequel les informations d'authentification (760, 860) incluent des informations concernant le second dispositif de réseau domestique (700, 800) pour enregistrer dessus les informations d'authentification (760, 860).

5. Système selon l'une quelconque des revendications 1 à 4, dans lequel les informations d'authentification (760, 860) incluent un identificateur d'informations d'authentification.

6. Système selon l'une quelconque des revendications 1 à 5, dans lequel l'unité d'interface (722, 702, 822, 802) inclut une unité d'émetteur-récepteur pour une communication locale.

7. Système selon la revendication 6, dans lequel la communication locale inclut une communication Ir-DA.

8. Système selon la revendication 6, dans lequel la communication locale inclut une communication Bluetooth.

9. Système selon la revendication 6, dans lequel la communication locale inclut une communication série câblée.

10. Système selon la revendication 6, dans lequel la communication locale inclut une communication parallèle câblée.

11. Procédé pour authentifier des dispositifs de réseau domestique, comportant les étapes consistant à :
générer des informations d'authentification (760) concernant un dispositif de réseau domestique spécifique (720) et transmettre les informations d'authentification générées (760) à d'autres dispositifs de réseau domestique (700), et
recevoir les informations d'authentification transmises (760) et enregistrer les informations d'authentification reçues (766) concernant un autre dispositif de réseau domestique (700),
**caractérisé en ce que** :
les informations d'authentification générées (760) sont transmises à d'autres dispositifs de réseau domestique (700) sur un réseau privé (790) ayant une couverture limitée, et
les informations d'authentification transmises sont reçues sur l'autre dispositif de réseau domestique (700) sur le réseau privé (790).

12. Procédé selon la revendication 11, comportant :
la répétition des informations d'authentification (860) transmises dans l'étape de génération sur le réseau privé (890), et
les informations d'authentification reçues (860) étant transmises dans l'étape de répétition sur le réseau privé (890).

13. Procédé selon la revendication 11 ou 12, dans lequel les informations d'authentification (760, 860) incluent des informations concernant le dispositif de réseau domestique spécifique (720, 820) pour générer ses propres informations d'authentification (760, 860).

14. Procédé selon la revendication 11, 12 ou 13, dans lequel les informations d'authentification (760, 860) incluent des informations concernant l'autre dispositif de réseau domestique (700, 800) pour enregistrer dessus les informations d'authentification (760).

15. Procédé selon l'une quelconque des revendications 11 à 14, dans lequel les informations d'authentification (760, 860) incluent un identificateur d'informations d'authentification.

16. Dispositif de réseau domestique (720, 820), comportant :
une unité de génération d'informations d'authentification opérationnelle pour générer des informations d'authentification (760, 860) du dispositif de réseau (720, 820), et
une unité d'interface (722, 822) opérationnelle pour transmettre les informations d'authentification générées à d'autres dispositifs de réseau domestique (700, 800),
**caractérisé en ce que** :
l'unité d'interface (722, 822) est opérationnelle pour transmettre les informations d'authentification générées (760, 860) aux autres dispositifs de réseau domestique (700, 800) sur un réseau privé (790, 890) ayant une couverture limitée.

17. Dispositif de réseau domestique (720, 820) selon la revendication 16, dans lequel le dispositif de réseau domestique (720, 820) génère ses propres informations d'authentification (760, 860) et transmet les informations d'authentification générées (760, 860) à d'autres dispositifs de réseau domestique (700, 800) sur le réseau privé (790, 890).

18. Dispositif de réseau domestique (700, 800) pour une authentification (700), comportant :
des moyens (702, 802) pour recevoir des informations d'authentification (760, 860), et
des moyens (770, 870) pour enregistrer les informations d'authentification reçues,
**caractérisé en ce que** :
les moyens (702, 802) pour recevoir des informations d'authentification sont conçus pour recevoir des informations d'authentification (760, 860) sur un réseau privé (790, 890) ayant une couverture limitée.

19. Dispositif de réseau domestique selon la revendication 18, comportant :
une unité d'interface (702, 802) opérationnelle pour recevoir les informations d'authentification (760) sur le réseau privé (790, 890) depuis un dispositif de réseau domestique (720, 820) pour demander une authentification, et
une unité d'enregistrement d'informations d'authentification (770, 870) opérationnelle pour enregistrer dessus les informations d'authentification reçues (760, 860).

20. Dispositif de réseau domestique (840), comportant :
des moyens (842) pour recevoir des informations d'authentification (860) depuis un dispositif de réseau domestique spécifique (820),
**caractérisé en ce que** :
les moyens de réception (842) sont opérationnels pour recevoir les informations d'authentification (860) depuis le dispositif de réseau domestique spécifique (820) sur un réseau privé (890) ayant une couverture limitée, et
le dispositif de réseau domestique (840) comporte des moyens (842) pour transmettre les informations d'authentification reçues (860) sur le réseau privé (890) à d'autres dispositifs de réseau domestique (800).

21. Dispositif de réseau domestique selon l'une quelconque des revendications 16 à 20, dans lequel les informations d'authentification (760, 860) incluent des informations concernant un dispositif de réseau domestique (720, 820) pour demander une authentification.

22. Dispositif de réseau domestique selon l'une quelconque des revendications 16 à 21, dans lequel les informations d'authentification (760, 860) incluent des informations concernant un dispositif de réseau domestique (700, 800) pour enregistrer les informations d'authentification.

23. Dispositif de réseau domestique selon l'une quelconque des revendications 16 à 22, dans lequel les informations d'authentification (760, 860) incluent un identificateur d'informations d'authentification.

24. Dispositif de réseau domestique selon la revendication 17 ou 19, dans lequel l'unité d'interface (702, 722) inclut une unité d'émetteur-récepteur (702, 722) pour une communication locale.

25. Dispositif de réseau domestique selon la revendication 24, dans lequel la communication locale inclut une communication IrDA.

26. Dispositif de réseau domestique selon la revendication 24, dans lequel la communication locale inclut une communication Bluetooth.

27. Dispositif de réseau domestique selon la revendication 24, dans lequel la communication locale inclut une communication série câblée.

28. Dispositif de réseau domestique selon la revendication 24, dans lequel la communication locale inclut une communication parallèle câblée.
